# EUROPEAN PATENT SPECIFICATION

(11) **EP 3 739 229 B1**
(45) Date of publication and mention of the grant of the patent: **14.12.2022**
(21) Application number: 19174317.8
(22) Date of filing: 14.05.2019
(51) Int. Cl.: F16D 1/08, F16D 43/286

(54) **SAFETY COUPLING OR CONNECTING COUPLING WITH A TORQUE SENSOR**
SICHERHEITSKUPPLUNG ODER ANSCHLUSSKUPPLUNG MIT EINEM DREHMOMENTSENSOR
COUPLAGE DE SÉCURITÉ OU RACCORD D'ACCOUPLEMENT AVEC UN CAPTEUR DE COUPLE

(43) Date of publication of application: 18.11.2020
(73) Proprietor: Voith Patent GmbH, 89522 Heidenheim (DE)
(72) Inventor: Bergström, David, 82494 Hudiksvall (SE); Munktell, Henrik, 82433 Hudiksvall (SE); Albinsson, Andreas, 82471 Delsbo (SE); Li, Hua, 89522 Heidenheim (DE)
(74) Representative: Voith Patent GmbH - Patentabteilung

(56) References cited:
- WO-A1-2009/023414
- DE-A1- 19 814 078
- DE-A1-102015 110 861
- DE-B4- 19 814 078
- US-A- 5 330 039

## Description

### TECHNICAL FIELD

The present invention relates generally to safety couplings. The safety coupling comprises a torque-transmitting coupling unit with one driving coupling member and one driven coupling member in friction engagement. Wherein the transferrable torque is adjustable to a predefined torque value by the engagement mechanism and wherein the torque sensor comprises a torque sensor element, wherein the torque sensor element is arranged within a recess of one coupling member. And wherein a rotating transmitter/receiver is arranged on an outer surface of the safety coupling.

This invention relates generally to safety couplings of the next generation.

### BACKGROUND

CN109114129A discloses an intelligent safety coupling and its working methods, with real-time dynamic torque control actuator. A coupling control system will analyze and compare sensor data of a torque sensor in real time with pre-selected torque values. If the real-time torque exceeds a predetermined torque value, the control system sends commands to an actuator. The actuator arranges an disengagement action immediately to achieve torque limiting purposes. The torque dynamic data acquisition, analysis and control, and actuator as an execution mechanism are integrated in coupling to form an independent intelligent device. The intelligent torque limiting safety coupling can be widely used in metallurgy, energy, mining, aerospace, automotive, construction machinery and other various industrial fields.

The documents US 5330039 A, WO 2009/023414 A and DE 102015110861 A also disclose safety couplings.

Voith Turbo Safeset AB delivers such torque transmitting couplings with an overload protection under the name SafeSet and SmartSet. Further connecting coupling are provided to connect shafts with by the use of friction.

The SafeSet principle is simple: friction and flexibility. No material fatigue, a constant torque transmission and adaptability. SafeSet couplings are available for the most demanding application requirements. Some of the available design options: Torque release between 1 and 20 000 kNm, adjustable torque settings from 50 to 100 % of max torque setting, slip and release mechanism at a preset torque, immediate release for over-torque situations. The SafeSet coupling includes a twin-walled hollow sleeve. A friction connection is provided by surface pressure. Therefore the twin wallet hollow sleeve is expanded by pressurized hydraulic oil. The integrated shear tube holds pressure to ensure torque transmission. In an overload situation the coupling slips and the shear tube shears off. Oil pressure drops and the frictional surfaces separate. The coupling rotates on bearings without transmitting any torque.

SmartSet is a process improving coupling with controlled slip. It has the ability to slip without releasing of short duration and dynamic torque peaks. SmartSet improves processes and maximizes the output of the application by functioning as an adjustable peak shaver. It can reduce system transient torques with short slippages, without releasing. It can be adapted for start-ups or continuous drives that experience many short peaks. The technology is the same as for the SafeSet coupling, but it is equipped with a centrifugal device named SmartSet Device that will give the coupling an additional slip feature. This centrifugal device is activated by the rotational speed of the intended application. This enables the coupling to slip during high transient torques. If the torque peak is of long duration in an overload situation, like a complete blockage, the SmartSet coupling can fully release as a normal SafeSet coupling and subsequently save the drive train from catastrophic failure. Torque capacity available between 10 to 10 000 kNm. The SmartSet can be used up to 1000rpm. At higher rotational speed the centrifugal device breaks.

### SUMMARY

It is an object of the invention to provide a safety coupling comprising a torque sensor, wherein the safety coupling remain very compact.

The objection of the invention is solved by the features of claim 1. The safety coupling comprises a driving coupling member and a driven coupling member and an engagement mechanism to provide a connection of the coupling members, wherein an engagement of both coupling members is adjustable by the engagement mechanism. By the engagement mechanism the transferrable torque is adjustable to a predefined torque value. The transferred torque is measured by a torque sensor. The torque sensor comprises a torque sensor element. This torque sensor element is arranged in a recess of one coupling member. Thereby the torque sensor element is arranged in a protected way. A damage of the sensor element is prohibited. Further the safety coupling remains very compact because the torque sensor element as a part of a torque sensor is integrated in the safety coupling.

According to the invention a rotating transmitter/receiver for transmitting the torque sensor measurements is arranged on an outmost surface of the safety coupling. So the energy for transmitting the data is reduced.

The invention is characterized by that the safety coupling comprises a non-rotating transmitter/receiver and comprises a guidance element, for example an edge, groove or ring, to guide the non-rotating receiver/transmitter to stay at predefined distance from the rotating receiver/transmitter.

Different solutions of engagement mechanism are realized in safety couplings. For example form locking mechanism are well known, for example disclosed in CN 109 114129 A wherein the transferrable torque is limited to a predetermined value. A different kind of engagement mechanism is provided by frictional engagement, wherein by adjustment of a pressure in a cylindrical cavity the transferrable torque is adjustable. Such safety couplings are known named Safeset of Voith or Hyguard of Renk.

In an embodiment the torque is measured by the measurement of the torsion of the shaft. Especially strain gauge can be used as very reliable sensor elements. In a preferred sensor element an even number of strain gauges are arranged circumferential on a circumferential surface of the recess. Especially the sensor element comprises a plurality of strain gauges wherein every strain gauge comprises a counterpart strain gauge arranged in a distance of 180 degree. Especially at least four and preferred at least eight strain gauges are arranged on a circumferential surface of the coupling member. The even number of strain gauges can be arranged on a regular formation on the circumferential surface of the coupling member avoiding unbalanced mass or the need of additional mass for balancing the coupling member.

In a further embodiment the transferred torque of the driven coupling member is measured. So energy effects of the engagement mechanism have no effect on the torque measurements. So it is possible to monitor the transferred torque. In a preferred embodiment the measured torque values are stored in data storage. A reliable review of the transferred torque is possible.

In a lot of application there is the need to take care that a predetermined torque is not exceeded. It is also possible to recognize a malfunction of the safety coupling if the measured torque value exceeds the predetermined torque value.

In a preferred embodiment the torque sensor element is arranged on a thinned section of one of the coupling members within the torque transmission path. So the effect of torsion is intensified.

In a further embodiment of the invention the one of the coupling members comprises a pressure element, also named counter pressure sleeve. The pressure element comprises a cylindrical cavity for providing a force for frictional engagement of a separate flange sleeve.

In a preferred embodiment the driven coupling member comprises the pressure element and the flange sleeve. The recess for the torque sensor element is provided by the pressure element and the flange sleeve. By the two part form it is possible to open the recess. The installation of the torque sensor element is easier. The sensor element can be mounted before the counter pressure element is installed. This has a positive effect on the production costs. Further it is possible to realize an exchange of the sensor element in a comfortable way by disassembly of the counter pressure element.

In a further embodiment the torque sensor element is arranged in axial direction between the cylindrical cavity and the power train exit of the driven coupling member. This has a positive effect on the measurement results. The sensor element is arranged on an element of the force flow.

In a further example not part of the invention, the rotating transmitter/receiver is realized in form of a coil and the non-rotating transmitter/receiver is with one or a plurality of loops surrounding the rotating transmitter/receiver or vice versa.

In an example not part of the invention, embodiment the rotating transmitter/receiver is coil shaped and mounted on an adjustable bracket to allow adjustment of an air gap between the rotating and non-rotating transmitter/receiver to optimize the signal/power transfer.

In a preferred example not part of the invention, torque sensor parts are mounted on a separate disc or ring between the pressure element and the flange sleeve, wherein the torque sensor element is arranged on the flange sleeve. So only additional construction space for the at least torque sensor element is minimized.

In a preferred example not part of the invention, the elements of the sensor and the controller and transmitter/receiver are arranged balanced in respect of rotation on one coupling member.

In a further embodiment the wireless connection is used to provide the needed energy for at least the torque sensor. Preferably a separate energy production using energy harvesting is avoided. Thereby the complexity of the safety coupling remains on a lower level. Further this has a positive effect on the needed construction place.

In a further example not part of the invention, a coil shaped rotor antenna is mounted on an adjustable support element, for example a bracket. The support element allows an adjustment of an air gap between the rotor antenna and stator, wherein the position of the support element is adjustable in radial direction.

In a further embodiment the torque sensor comprises a data storage wherein at least the measured torque measurements are stored on data storage wherein preferably the data storage is arranged within the recess. So the measured data will not be lost in the case of an interruption of the wireless connection. Further it is possible to provide bundled data transfer and only a wireless connection from time to time is needed, maybe in regular intervals. In the case of an arrangement of the data storage within the recess the data storage is protected against mechanical damage.

In a further embodiment a signal processor is arranged on a rotating part of the safety coupling, wherein the signal processor is used for processing of the data of the sensor element. Therefor the data volume of the data to be transferred can be reduced.

In a further example not part of the invention, an alarm signal is generated by the processor indicating a torque measurement value exceeding the predefined value. So it is possible to react very fast on an unwanted situation. If the torque measurement take place on the driving coupling member, it is possible to disconnect the safety coupling as a reaction on the alarm signal.

In a preferred embodiment the safety coupling comprises a temperature sensor arranged on the driven coupling member, preferred arranged within the recess. The temperature measurements can be used to adjust the measurements value in dependence of the temperature. Especially the temperature values can be used for temperature drift correction of the used strain gauges of the torque sensor element. By that it is possible to get more precisely measurements.

Other technical features may be readily apparent to one skilled in the art from the following figures, descriptions, and claims.

### BRIEF DESCRIPTION OF THE DRAWINGS

For a more complete understanding of this invention, reference is now made to the following description, taken in conjunction with the accompanying drawings, in which:
**Fig.1** is an illustration of a safety coupling comprising a torque sensor wherein the cylindrical cavity is part of a counter pressure element
**Fig. 2** is an illustration of a safety coupling wherein the cylindrical cavity part of the element with frictional contact surface.
**Fig. 3** shows an embodiment of a torque sensor comprising strain gauges.

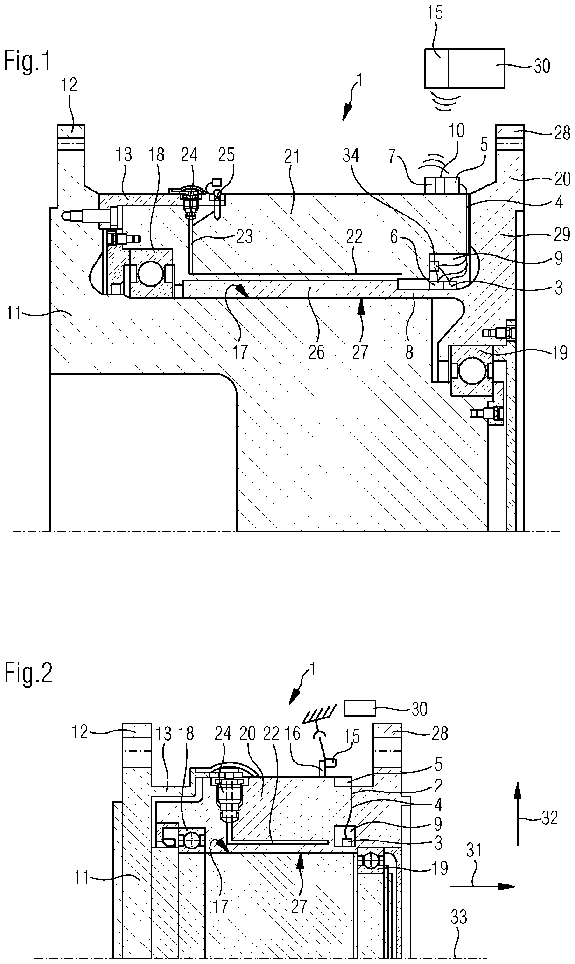

FIG. 1 shows a safety coupling 1. The safety coupling 1 comprises a driving coupling member 11, also named first coupling member, and a driven coupling member 20, also named second coupling member. The first coupling member 11 is arranged coaxial to the second coupling member 20. The second coupling member 20 comprises a pressure sleeve 21 and a flange sleeve 29. The pressure sleeve 21, also named counter pressure element or pressure element, surrounds the first coupling member 11 and the flange sleeve 29. The pressure sleeve 21 comprises a cylindrical cavity 22 and a channel 23 connected to the cylindrical cavity 22 for pressurization of the cylindrical cavity 22. Further the channel 23 can be used for depressurization of the cylindrical cavity 22. A shear off valve 24 is arranged at the end of the channel 23. To fill the cylindrical cavity a refill opening 25 can be used. The refill opening 25 is connected to the channel 23 also.

The pressure sleeve 21 is adapted to be able to take different setting positions. In an expanded setting position, torque can be transferred between said coupling members 11, 20. An outer cylindrical surface 17 of the coupling member 11 is in frictional engagement with the inner cylindrical surface 27 of a hollow cylindrical part 26 of the flange sleeve 29 of the second coupling member 20. In dependence of the pressure within the cylindrical cavity 22 the amount of transferrable torque can be adjusted. The torque transfer illustrated in this case takes place solely via the mutually opposing cylindrical surfaces 17 and 27.

In a relaxed setting the cylindrical cavity is not pressurized. In that setting no torque and associated rotational movement can be transferred between said two coupling members 11, 20.

The shear of valve 24 can be open by a shear off ring 13. The shear off ring is fixed in relation to the first coupling member 11. So in the case of relative rotational movement of the first 11 and second coupling member 20 the shear off valve 24 will be opened. A rapid evacuation of said enclosed pressure in the cylindrical cavity 22 will take place. There with the first coupling member 11 is enabled to rotate freely in relation to said second coupling member 20, especially the sleeve flange 29.

In the embodiment of figure 1 the first coupling member comprises a first flange 12 for connection to a driving shaft and the sleeve flange 29 comprises a flange 28 for connection to a driven shaft.

A first bearing 18 is arranged between the pressure sleeve 21 and the first coupling member 11. A second bearing 19 is arranged between the flange sleeve 29 and first coupling member 11.

A torque senor element 3 of a torque sensor 2 is arranged in a recess 9 of the second coupling member. The torque sensor 3 further comprises a measuring feeder 4 connecting the torque sensor element 3 and further parts of the torque sensor element 2.

The sensor element 3 is arranged on an outer surface of the cylindrical hollow part 26 of the flange sleeve 29. The recess is arranged between the hollow cylindrical part 26 of the sleeve flange 29 and the pressure sleeve 21. The hollow cylindrical part 26 comprises a thinned section 8. The torque element 3 is arranged on the outer surface within the thinned section 8 of the hollow cylindrical part 26. Further the sensor element 3 is arranged in axial direction between the second flange 28 and the cylindrical cavity 22 of the pressure sleeve 21. Between the pressure sleeve 21 and the radial extending part of the flange sleeve 29 there is a small slot for the measurement feeder 4. The measurement feeder connects the torque sensor element 3 with a signal processor 5, also named controller. Further a temperature sensor element 6 is arranged within the recess 9. The temperature sensor element 6 is connected to the controller 5 also. Additionally a revolution counter 7 is arranged on the outer surface of the safety coupling 1.

The controller 5 is arranged on an outer surface of the safety coupling 1. The controller 5 is connected to the transmitter/receiver 10. The transmitter/receiver 10 transmits data wirelessly to stationary transmitter/receiver 15. This transmitter/receiver 15 is in data connection with a central controller 30. The needed energy is transferred by the wireless connection between the stationary transmitter/receiver 15 and the rotating transmitter/receiver 10. Alternative energy storage could be arranged on the safety coupling especially within the recess 9.

It is also possible to use the safety coupling in the other direction by introducing the torque via the flange sleeve 29.

In Figure 2 a further embodiment of a safety coupling 1 is disclosed. In this embodiment the second coupling member 20 the pressure sleeve 21 and the flange sleeve 29 are one piece. The recess 9 is integrated in the second coupling member 20. The torque sensor element 3 is arranged in the recess 9 and there is a measuring feeder 4 providing signal connection to a the controller arranged on an outer surface of the safety coupling 1. The second coupling member comprises a cylindrical cavity 22 for pressurization. The cylindrical cavity 22 is closed by a shear off valve 24. The shear off ring 13 is coupled with the first coupling member 11. The first comprises an outer cylindrical surface and the second coupling member 20 comprises a inner cylindrical surface 27 for frictional engagement of the both coupling members 11, 20. The rotation axis of the safety coupling is 33. Radial direction is 32 and the axial direction is 31.

This embodiment shows guidance 16 for guiding the non-rotating transmitter/receiver 15. The guidance 16 is linked with an outer surface of the safety coupling. The guidance is fixed on the second coupling member and rotating with the second coupling member 20. This non-rotating receiver 15 is jointly mounted by a joint 35. There is a lever to connect the joint 35 with the non-rotating transmitter/receiver 15. The transmitter/receiver 15 is moveable mounted preferably in at least two directions, especially ball mounted. The non-rotating transmitter/receiver 15 is connected with a central control system 30 by a wire or wireless.

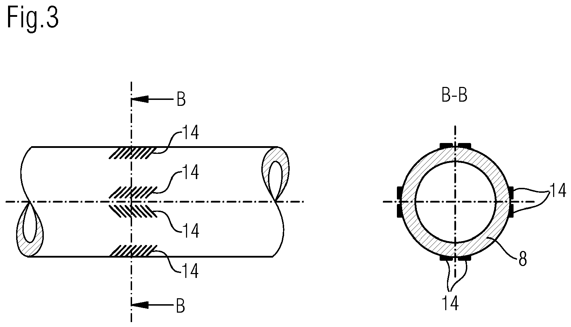

Figure 3 shows the torque sensor element 3 in more detail. The shown torque sensor element 3 comprises strain gauges 14. In this embodiment 8 strain gages 14 are arranged on the outer surface of the hollow cylindrical part 26 of the flange sleeve 29.

It may be advantageous to set forth definitions of certain words and phrases used throughout this patent document. The term "couple" and its derivatives refer to any direct or indirect communication between two or more elements, whether or not those elements are in physical contact with one another.

The terms "**transmit**," "**receive**," and "**communicate**," as well as derivatives thereof, encompass both direct and indirect communication. The terms "**include**" and "**comprise**," as well as derivatives thereof, mean inclusion without limitation. The term "or" is inclusive, meaning **and/or**. The phrases "**associated with**" and "**associated therewith**," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

The term **"controller"** means any device, system, or part thereof that controls at least one operation. A controller may be implemented in hardware, firmware, software, or some combination of at least two of the same. The functionality associated with any particular controller may be centralized or distributed, whether locally or remotely.

### REFERENCE LIST

- 1: safety coupling
- 2: torque sensor
- 3: torque sensor element
- 4: measuring feeder
- 5: controller
- 6: temperature sensor element
- 7: revolution counter
- 8: thinned section
- 9: recess
- 10: transmitter/receiver
- 11: 1^{st} coupling member, driving coupling member
- 12: 1^{st} flange
- 13: shear off ring
- 14: strain gauge
- 15: non-rotating transmitter/receiver
- 16: guidance
- 17: outer cylindrical surface, frictional surface of 11
- 18: 1^{st} ball bearing
- 19: 2^{nd} ball bearing
- 20: 2^{nd} coupling member; driven coupling member
- 21: counter pressure sleeve , pressure element
- 22: cylindrical cavity
- 23: channel
- 24: shear off valve
- 25: refill opening
- 26: hollow cylindrical part
- 27: inner cylindrical surface, fictional surface of 20
- 28: 2^{nd} flange
- 29: flange sleeve
- 30: central controller, control system
- 31: axial direction
- 32: radial direction
- 33: rotation axis
- 34: data storage
- 35: joint
- 36: lever

## Claims

1. Safety coupling (1) comprising a driving coupling member (11), a driven coupling member (20), a torque sensor (2) and an engagement mechanism to provide a connection of the coupling members (11, 20), wherein the transferrable torque is adjustable to a predefined torque value by the engagement mechanism wherein the torque sensor (2) comprising a torque sensor element (3), wherein the torque sensor element (3) is arranged within a recess of one coupling member (11, 20), preferable the driven coupling member (20) and comprising a rotating transmitter/receiver (10) arranged on an outer surface of the safety coupling (1)
**characterized by**
comprising a non-rotating transmitter/receiver (15) guided by an rotating guidance of one of the coupling members (11, 20) to provide a predefined distance between the rotating transmitter/receiver (10) and the non-rotating transmitter/receiver (15).

2. Safety coupling of claim 1, wherein the torque sensor element (3) measures the torsion of this coupling member (11, 20), wherein the torque sensor element (3) preferably comprises a plurality of strain gauges (14).

3. Safety coupling of one of the previous claims,
wherein the engagement mechanism provide a frictional engagement of the driving coupling member (11) and the driven coupling member (20).

4. Safety coupling of one of the previous claims,
wherein the engagement mechanism comprises a form locking mechanism for connection of driving coupling member (11) and driven coupling member (20).

5. Safety coupling of claim 1 or 2,
wherein the torque sensor element (3) is arranged on a thinned section (8) of one of the coupling members (11, 5) within the torque transmission path.

6. Safety coupling of one of claim 3 or claim 5,
wherein the torque sensor element (3) is surrounded by a pressure element (21).

7. Safety coupling of one of the previous claims,
wherein the torque sensor element (3) is arranged within a recess (9) of the driven coupling member (20), wherein the recess (9) is preferably provided by the pressure element (21) and the flange sleeve (29).

8. Safety coupling according to at least claim 3,
wherein the torque sensor element (3) is arranged in axial direction (31) between a cylindrical cavity (22) of the driven coupling member (20) and the power train exit (28) of the driven coupling member (20).

9. Safety coupling of the previous claim,
wherein the non-rotating transmitter/receiver (15) is joint mounted (35).

10. Safety coupling of one of the previous claims,
wherein the power for at least the torque sensor (2) is transferred by the wireless connection.

11. Safety coupling of one of the previous claims, wherein measured data of torque sensor 2 are stored on a data storage (34) arranged within the recess.

12. Safety coupling of one of the previous claims, wherein a signal processor (5) is arranged on a rotating part of the safety coupling, wherein the signal processor (5) is used for processing of the data of the at least one sensor element (3, 6).

13. Safety coupling of one of the previous claims, wherein a temperature sensor element (6) is arranged on the driven coupling member, preferred arranged within the recess.(9) and wherein the signals of the temperature sensor element (6) are used for temperature drift correction of the strain gauges (14) of the torque sensor element (3).

## Patentansprüche

1. Sicherheitskupplung (1), ein Antriebskupplungselement (11), ein angetriebenes Kupplungselement (20), einen Drehmomentsensor (2) und einen Eingriffsmechanismus zum Bereitstellen einer Verbindung der Kupplungselemente (11, 20) umfassend, wobei das übertragbare Drehmoment durch den Eingriffsmechanismus auf einen vordefinierten Drehmomentwert einstellbar ist, wobei der Drehmomentsensor (2) ein Drehmomentsensorelement (3) umfasst, wobei das Drehmomentsensorelement (3) in einer Vertiefung eines Kupplungselements (11, 20) angeordnet ist, vorzugsweise in dem angetriebenen Kupplungselement (20), und einen drehenden Sender/Empfänger (10) umfasst, der an einer Außenfläche der Sicherheitskupplung (1) angeordnet ist,
**dadurch gekennzeichnet, dass**
sie einen nicht-drehenden Sender/Empfänger (15) umfasst, der von einer drehenden Führung eines der Kupplungselemente (11, 20) geführt wird, um einen vordefinierten Abstand zwischen dem drehenden Sender/Empfänger (10) und dem nicht-drehenden Sender/Empfänger (15) bereitzustellen.

2. Sicherheitskupplung nach Anspruch 1, wobei das Drehmomentsensorelement (3) die Torsion dieses Kupplungselements (11, 20) misst, wobei das Drehmomentsensorelement (3) vorzugsweise mehrere Dehnungsmessstreifen (14) umfasst.

3. Sicherheitskupplung nach einem der vorhergehenden Ansprüche, wobei der Eingriffsmechanismus einen Reibschluss des Antriebskupplungselements (11) und des angetriebenen Kupplungselements (20) bereitstellt.

4. Sicherheitskupplung nach einem der vorhergehenden Ansprüche, wobei der Eingriffsmechanismus einen Formschlussmechanismus für die Verbindung des Antriebskupplungselements (11) und des angetriebenen Kupplungselements (20) bereitstellt.

5. Sicherheitskupplung nach Anspruch 1 oder 2, wobei das Drehmomentsensorelement (3) an einem ausgedünnten Teilabschnitt (8) eines der Kupplungselemente (11, 5) in dem Drehmomentübertragungsweg angeordnet ist.

6. Sicherheitskupplung nach Anspruch 3 oder Anspruch 5, wobei das Drehmomentsensorelement (3) von einem Druckelement (21) umgeben ist.

7. Sicherheitskupplung nach einem der vorhergehenden Ansprüche, wobei das Drehmomentsensorelement (3) in einer Vertiefung (9) des angetriebenen Kupplungselements (20) angeordnet ist, wobei die Vertiefung (9) vorzugsweise durch das Druckelement (21) und die Flanschhülse (29) bereitgestellt ist.

8. Sicherheitskupplung nach mindestens Anspruch 3, wobei das Drehmomentsensorelement (3) in axialer Richtung (31) zwischen einem zylinderförmigen Hohlraum (22) des angetriebenen Kupplungselements (20) und dem Antriebsstrangausgang (28) des angetriebenen Kupplungselements (20) angeordnet ist.

9. Sicherheitskupplung nach den vorhergehenden Ansprüchen, wobei der nicht-drehende Sender/Empfänger (15) gelenkig montiert (35) ist.

10. Sicherheitskupplung nach einem der vorhergehenden Ansprüche, wobei der Antrieb für mindestens den Drehmomentsensor (2) durch die drahtlose Verbindung übertragen wird.

11. Sicherheitskupplung nach einem der vorhergehenden Ansprüche, wobei Messdaten des Drehmomentsensors (2) in einem Datenspeicher (34) gespeichert werden, der in der Vertiefung angeordnet ist.

12. Sicherheitskupplung nach einem der vorhergehenden Ansprüche, wobei ein Signalprozessor (5) an einem drehenden Teil der Sicherheitskupplung angeordnet ist, wobei der Signalprozessor (5) dazu verwendet wird, die Daten des mindestens einen Sensorelements (3, 6) zu verarbeiten.

13. Sicherheitskupplung nach einem der vorhergehenden Ansprüche, wobei ein Temperatursensorelement (6) an dem angetriebenen Kupplungselement angeordnet ist und wobei die Signale des Temperatursensorelements (6) für eine Korrektur der Temperaturverschiebung der Dehnungsmessstreifen (14) des Drehmomentsensorelements (3) verwendet werden.

## Revendications

1. Accouplement (1) de sécurité comportant un organe (11) d'accouplement menant, un organe (20) d'accouplement mené, un capteur (2) de couple et un mécanisme de mise en prise servant à réaliser une liaison des organes (11, 20) d'accouplement, le couple transférable pouvant être réglé à une valeur de couple prédéfinie par le mécanisme de mise en prise, le capteur (2) de couple comportant un élément (3) de capteur de couple, l'élément (3) de capteur de couple étant disposé à l'intérieur d'un évidement d'un organe (11, 20) d'accouplement, de préférence l'organe (20) d'accouplement mené, et comportant un émetteur/récepteur tournant (10) disposé sur une surface extérieure de l'accouplement (1) de sécurité
**caractérisé**
**en ce qu'**il comporte un émetteur/récepteur non tournant (15) guidé par un guidage en rotation de l'un des organes (11, 20) d'accouplement pour ménager une distance prédéfinie entre l'émetteur/récepteur tournant (10) et l'émetteur/récepteur non tournant (15).

2. Accouplement de sécurité selon la revendication 1, l'élément (3) de capteur de couple mesurant la torsion de cet organe (11, 20) d'accouplement, l'élément (3) de capteur de couple comportant de préférence une pluralité de jauges (14) de déformation.

3. Accouplement de sécurité selon l'une des revendications précédentes, le mécanisme de mise en prise assurant une mise en prise par friction de l'organe (11) d'accouplement menant et de l'organe (20) d'accouplement mené.

4. Accouplement de sécurité selon l'une des revendications précédentes, le mécanisme de mise en prise comportant un mécanisme à blocage de forme pour la liaison de l'organe (11) d'accouplement menant et de l'organe (20) d'accouplement mené.

5. Accouplement de sécurité selon la revendication 1 ou 2, l'élément (3) de capteur de couple étant disposé sur une section amincie (8) de l'un des organes (11, 5) d'accouplement au sein du trajet de transmission de couple.

6. Accouplement de sécurité selon l'une des revendications 3 et 5, l'élément (3) de capteur de couple étant entouré par un élément (21) de pression.

7. Accouplement de sécurité selon l'une des revendications précédentes, l'élément (3) de capteur de couple étant disposé à l'intérieur d'un évidement (9) de l'organe (20) d'accouplement mené, l'évidement (9) étant de préférence ménagé par l'élément (21) de pression et le manchon (29) de bride.

8. Accouplement de sécurité selon au moins la revendication 3, l'élément (3) de capteur de couple étant disposé dans une direction axiale (31) entre une cavité cylindrique (22) de l'organe (20) d'accouplement mené et la sortie (28) de chaîne cinématique de l'organe (20) d'accouplement mené.

9. Accouplement de sécurité selon la revendication précédente, l'émetteur/récepteur non tournant (15) étant monté sur une articulation (35).

10. Accouplement de sécurité selon l'une des revendications précédentes, l'alimentation destinée au moins au capteur (2) de couple étant transférée par une liaison sans fil.

11. Accouplement de sécurité selon l'une des revendications précédentes, des données mesurées de capteur (2) de couple étant stockées sur un stockage (34) de données disposé à l'intérieur de l'évidement.

12. Accouplement de sécurité selon l'une des revendications précédentes, un processeur (5) de signaux étant disposé sur une partie tournante de l'accouplement de sécurité, le processeur (5) de signaux étant utilisé pour le traitement des données de l'élément ou des éléments (3, 6) de capteur.

13. Accouplement de sécurité selon l'une des revendications précédentes, un élément (6) de capteur de température étant disposé sur l'organe d'accouplement mené, de préférence disposé à l'intérieur de l'évidement (9) et les signaux de l'élément (6) de capteur de température étant utilisés pour une correction de dérive en température des jauges (14) de déformation de l'élément (3) de capteur de couple.
